# EUROPÄISCHE PATENTSCHRIFT

(11) **EP 1 301 729 B1**
(45) Veröffentlichungstag und Bekanntmachung des Hinweises auf die Patenterteilung: **26.01.2005**
(21) Anmeldenummer: 01969362.1
(22) Anmeldetag: 10.07.2001
(51) Int. Cl.: F16F 1/36, F16F 1/44, F16F 1/371

(54) **FEDERELEMENT**
SPRING ELEMENT
ELEMENT ELASTIQUE

(30) Priorität: 14.07.2000 DE 10034563
(43) Veröffentlichungstag der Anmeldung: 16.04.2003
(73) Patentinhaber: BASF AKTIENGESELLSCHAFT, 67056 Ludwigshafen (DE)
(72) Erfinder: BURLAGE, Thomas, 49134 Wallenhorst (DE); GELMKE, August-Wilhelm, 49356 Diepholz (DE); NYSSEN, Frederic, 49448 Lemförde (DE); WUCHERPFENNIG, Jan, 49448 Brockum (DE)
(86) Internationale Anmeldenummer: PCT/EP2001/007943
(87) Internationale Veröffentlichungsnummer: WO 2002/006696

(56) Entgegenhaltungen:
- EP-A- 0 293 631
- FR-A- 2 288 250
- GB-A- 1 285 338
- US-A- 5 419 539

## Beschreibung

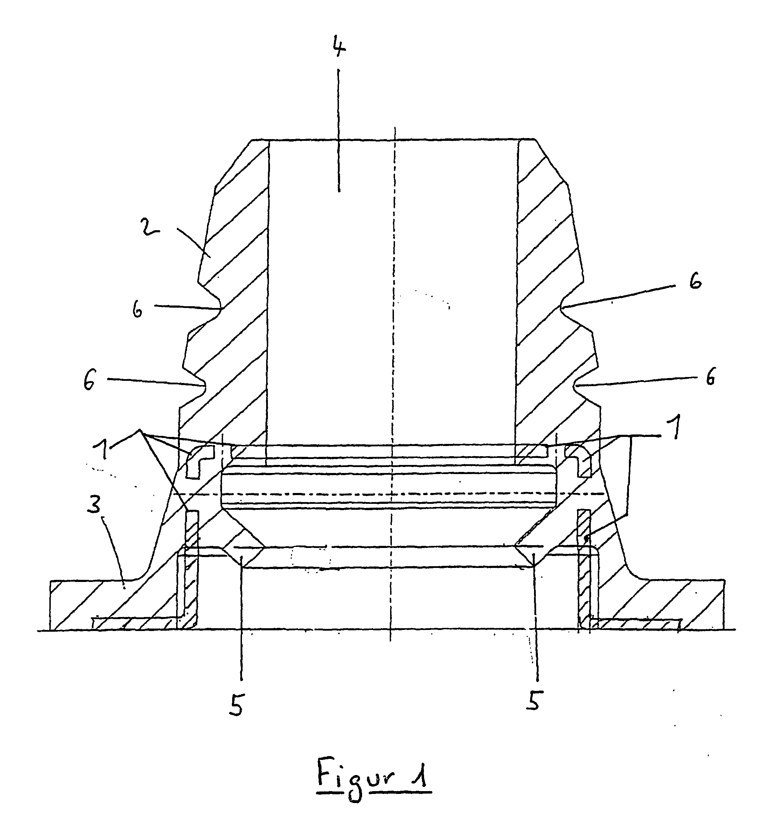

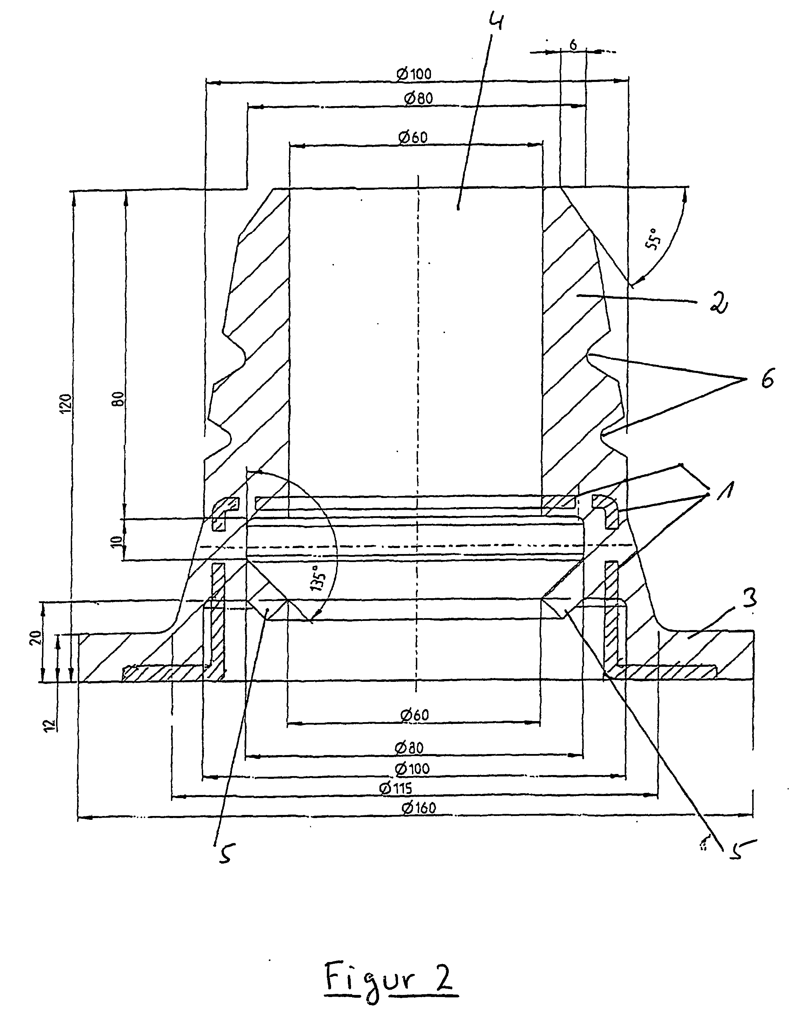

Die Erfindung betrifft Federelemente, bevorzugt auf der Basis von zelligen Polyurethanelastomeren, die ggf. Polyharnstoffstrukturen enthalten können, besonders bevorzugt auf der Basis von zelligen Polyurethanelastomeren mit einer Dichte nach DIN 53420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm.
Die erfindungsgemäßen Federelemente sind detailliert in der Figur 1 dargestellt. Eine vorteilhafte Ausführungsform der erfindungsgemäßen Federelemente findet sich in Figur 2.

Die aus Polyurethanelastomeren hergestellten Federelemente werden in Automobilen beispielsweise innerhalb des Fahrwerks, beispielsweise auf der Basis von elastischen Kunststoffen, beispielsweise Gummi oder Elastomeren auf der Basis von Polyisocyanat-Polyadditionsprodukten, beispielsweise Polyurethanen und/oder Polyharnstoffen, verwendet und sind allgemein bekannt. Sie werden insbesondere in Kraftfahrzeugen als Zusatzfedern, Pralldämpfer oder Endanschläge eingesetzt.

Die erfindungsgemäßen Federelemente dienen beispielsweise im Automobilbau im Bereich der Fahrwerks zur Unterstützung der Primärfeder beispielsweise einer Stahlspiralfeder. Die Befestigung der Federelemente kann direkt oder indirekt an der Karosserie, an der Achse oder auf dem Stoßdämpfer erfolgen. Durch die Federelemente werden Fahrkomfort und Fahrsicherheit der Automobile erhöht.

Aufgrund der sehr unterschiedlichen Charakteristika und Eigenschaften einzelner Automobilmodelle müssen die Federelemente individuell an die verschiedenen Automobilmodelle angepaßt werden, um eine ideale Fahrwerksabstimmung zu erreichen. Beispielsweise können bei der Entwicklung der Federelemente das Gewicht des Fahrzeugs, das Fahrwerk des speziellen Modells, die vorgesehenen Stoßdämpfer, die Abmessungen des Automobils und seine Motorleistung sowie die gewünschte Federcharakteristik je nach gewünschtem Komfort bei der Fahrt berücksichtigt werden. Hinzu kommt, daß durch die Konstruktion der Automobile schon aufgrund des zur Verfügung stehende Platzes individuelle auf die jeweilige Automobilkonstruktion abgestimmte Einzellösungen erfunden werden müssen.

Aus den vorstehend genannten Gründen können die bekannten Lösungen für die Ausgestaltung einzelner Federelemente nicht generell auf neue Automobilmodelle übertragen werden. Bei jeder neuen Entwicklung eines Automobilmodells muss eine neue Form des Federelements entwickelt werden, das den spezifischen Anforderungen des Modells gerecht wird.

Üblicherweise ist für die Schwingungsdämpfung der Einbau einer Federunterlage, eines Dämpfungslagers und einer Zusatzfeder notwendig. Diese Bauteile bestehen üblicherweise aus mikrozellulärem Polyurethan und werden jeweils für einen bestimmten Einsatzzweck ausgelegt, einzeln hergestellt separat in das Fahrzeug eingebaut. Die Anforderungen an die genannten Bestandteile der Schwingungsdämpfung unterschiedlich, so daß sie sich nur in unterschiedlichen Bauräumen realisieren lassen.

Für viele Einsatzzwecke wäre es wünschenswert, wenn die genannten Bestandteile für die Schwingungsdämpfung in einem Stück hergestellt werden könnten.

GB 1,285,338 beschreibt die Befestigung einer Gewindeschraube an einen Endanschlag mittels eines umvulkanisiertenn Einlegers. Die dort beschriebene Anordnung ist nicht zur Aufnahme eines Stoßdämpfers geeignet.

Die Aufgabe der Erfindung bestand darin, ein Federelement für die Schwingsdämpfung in Kraftfahrzeugen zu entwickeln, das gleichzeitig als Federunterlage, Dämpfungslager und Zusatzfeder wirkt, aus einem Stück besteht und in einem Arbeitsgang hergestellt werden kann.

Die Aufgabe konnte überraschenderweise gelöst werden durch ein Federelement gemäß Figur 1, das einen Einleger (1) aus einem kompakten Material mit einer Steifigkeit, die höher ist als die des Materials des Federelements, insbesondere des mikrozellulären Polyurethanelastomeren, enthält, und ein Bauteil (2), das als zusatzfeder wirkt und ein Bauteil (3), das als Federunterlage wirkt, enthält, wobei das Teil 2, das als Zusatzfeder wirkt, einen mittigen zylindrischen Hohlraum aufweist.

Gegenstand der Erfindung ist demzufolge ein Federelement, insbesondere aus mikrozellulärem Polyurethan, das einen Einleger (1) aus einem kompakten Material mit einer Steifigkeit, die höher ist als die des mikrozellulären Polyurethanelastomeren, aus dem das Federelement besteht, enthält, und ein Teil (2), das als Zusatzfeder wirkt und ein Teil (3), das als Federunterlage wirkt, enthält.

Unter einem Einleger wird ein Teil verstanden, das in die Form eingelegt und anschließend zumindest teilweise mit dem Polyurethan umschäumt wird.

Das erfindungsgemäße Federelement wird in Figur 1 dargestellt.

Durch den Einleger (1), der sich insbesondere zwischen dem Teil (2), das als Zusatzfeder wirkt und dem Teil (3), das als Federunterlage wirkt, befindet, wurde es möglich, die Bauteile miteinander zu verbinden, ohne daß es zu einer Beeinträchtigung der mechanischen Stabilität und der Dämpfungseigenschaften des Federelements kommt. Der Einleger (1) wirkt dabei als Dämpferlager.

Das erfindungsgemäße Federelement hat mittig einen zylindrischen Hohlraum (4), welcher der Aufnahme des Stoßdämpfers dient. An der Außenseite des Teiles (2), das als Zusatzfeder wirkt, sind befinden sich Einbuchtungen (6), die der Aufnahme der Primärfeder, insbesondere einer Stahlspiralfeder, dienen.

Vorzugsweise befindet sich im zylindrischen Hohlraum (4), insbesondere zwischen dem Teil (2), das als Zusatzfeder wirkt und ein Teil (3), das als Federunterlage wirkt, mindestens eine Noppe (5), die bei der Montage des Federelements in das Kraftfahrzeug über den Stoßdämfer geklappt wird.

Der Einleger besteht vorzugsweise aus Metall, insbesondere Stahl, oder aus einem Hartkunststoff.

Der Einleger wird vor dem Einbringen des Polyurethansystems in die Form, in der das Federelement hergestellt wird, eingebracht und zusammen mit dem Federelement entformt.

Die erfindungsgemäßen Federelemente sind im Detail in der Figur 1 dargestellt, die Figur 2 zeigt eine vorteilhafte Ausführungsform der erfindungsgemäßen Federelemente. Fertigungsbedingte Abweichungen in den Abmessungen von bis zu +/- 2 mm bei der in Figur 2 dargestellten vorteilhaften Ausführungsform sind tolerabel. Gerade die in Figur 2 beschriebene dreidimensionale Form erwies sich als besonders geeignet, den spezifischen Anforderungen durch das spezielle Automobilmodell gerecht zu werden, insbesondere auch im Hinblick auf die spezifischen räumlichen Anforderungen.

In der in Figur 2 dargestellten bevorzugten Ausführungsform hat der zylindrische Hohlraum 4 im Bereich der Zusatzfeder 2 einen Durchmesser von 60 mm, eine Höhe von 120 mm, einen maximalen Außendurchmesser des Teils 2 von 80 mm, einen maximalen Außendurchmesser des Teils 2 von 160 mm und einen maximalen Innendurchmesser des Teils 3 von 115 mm.

Die erfindungsgemäßen Federelemente basieren bevorzugt auf Elastomeren auf der Basis von Polyisocyanat-Polyaddionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten.
Die Herstellung der Polyisocyanat-Polyadditionsprodukte kann nach allgemein bekannten Verfahren erfolgen, beispielsweise indem man in einem ein- oder zweistufigen Prozeß die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach 5 bis 60 Minuten ausgehärtet und damit entformbar.

Die Menge des in das Formwerkzeug eingebrachten Reaktionsgemisches wird üblicherweise so bemessen, daß die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozeß zunächst ein NCO-gruppenhaltiges Prepolymeres hergestellt. Dazu wird die Komponente (b) mit (a) im Überschuß üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die erfindungsgemäße Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend gegebenenfalls die weiteren eingangs dargestellten Komponenten umsetzt.

Zur Verbesserung der Entformung der Schwingungsdämpfer hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wäßrigen Seifenlösungen, zu beschichten.

Die Formstandzeiten betragen in Abhängigkeit von der Größe und Geometrie des Formteils durchschnittlich 5 bis 60 Minuten.

Nach der Herstellung der Formteile in der Form können die Formteile bevorzugt für eine Dauer von 1 bis 48 Stunden bei Temperaturen von üblicherweise von 70 bis 120°C getempert werden.

Zu den Ausgangskomponenten zur Herstellung der Polyisocyanat-Polyadditionsprodukte kann folgendes ausgeführt werden:

Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat (TODI), 1,2-Diphenylethandiisocyanat, Phenylendiisocyanat und/oder aliphatische Isocyanate wie z.B. 1,12-Dodecan-, 2-Ethyl-1,4-butan, 2-Methyl-1,5-pentan-1,4-Butan-diisocyanat und vorzugsweise 1,6-Hexamethylendiisocyanat und/oder cycloaliphatische Diisocyanate z.B. Cyclohexan-1,3- und 1,4-diisocyanat, 2,4- und 2,6-Hexahydrotoluyllen-diisocyanat, 4,4'-, 2,4'- und 2,2'-Dicyclohexylmethan-diisocyanat, vorzugsweise 1-Isocyanato-3,3,5-trimethyl-Federelement-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 3, 3'-Dimethyl-diphenyl-diisocyanat (TODI), 2,4- und/oder 2,6-Toluylendiisocyanat (TDI) und/oder Mischungen dieser Isocyanate eingesetzt.

Als gegenüber Isocyanaten reaktive Verbindungen (b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 5000. Bevorzugt werden als (b) Polyetherpolyole, Polyesterpolyalkohole und/oder hydroxylgruppenhaltige Polycarbonate eingesetzt.

Geeignete Polyetherpolyole können hergestellt werden nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- und Kaliumethylat oder Kaliumisopropylat, als Katalysatoren und unter Zusatz mindestens eines Startermoleküls, das 2 oder 3, vorzugsweise 2 reaktive Wasserstoffatome gebunden enthält, oder durch kationische Polymerisation mit Lewissäuren, wie z.B. Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest.

Geeignete Alkylenoxide sind beispielsweise 1,3-Propylenoxid, 1,2- bzw. 1,3-Butylenoxid, vorzugsweise Ethylenoxid, 1,2-Propylenoxid und Tetrahydrofuran. Die Alkylenoxide können einzeln, alternierend nacheinander oder als Mischung verwendet werden. Als Startermoleküle kommen beispielsweise in Betracht: Wasser, organische Dicarbonsäuren, wie Bernsteinsäure, adipinsäure, Phthalsäure und Terephthalsäure, aliphatische und aromatische, N-mono- und N, N'-dialkylsubstituierte Diamine mit 1 bis 4 Kohlenstoffatomen im Alkylrest, wie mono- und dialkylsubstituiertes Ethylendiamin, 1,3-Propylendiamin, 1,3- bzw. 1,4-Butylendiamin, 1,2-, 1,3-, 1,4-, 1,5- und 1,6-Hexamethylendiamin, Alkanolamine, wie z.B. Ethanolamin, N-Methyl- und N-Ethylethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden zwei- und oder dreiwertige Alkohole, z.B. Alkandiole mit 2 bis 12 C-Atomen, vorzugsweise 2 bis 4 C-atomen, wie z.B. Ethandiol, Propandiol-1,2, und -1,3, Butandiol-1,4, Pentrandiol-1,5, Hexandiol-1,6, Glycerin, Trimethylolpropan, und Dialkylenglykole, wie z.B. Diethylen-dlykol und Dipropylenglykol.

Bevorzugt werden als (b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z.B. Ethylenglykol, Diethylenglykol, Butandiol-1,4, Pentandiol-1,5, Hexandiol-1,6, Decandiol-1,10, 2-Methylpropan-1,3-diol, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden.

Als Polyesterpolyole vorzugsweise verwendet werden Ethandiolpolyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate, 2-Methyl-1,3-propandiol-1,4-butandiol-polyadipate und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit e-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren niedermolekulare Kettenverlängerungs- und/oder Vernetzungsmitteln (b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel.

Als (b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(b-hydroxyethyl)-hydrochinon oder 1,3-Di(b-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin.

Als höherfunktionelle Vernetzungsmittel (b1) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel können verwendet werden: alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt werden jedoch keine aromatischen Diamine eingesetzt. Bevorzugt erfolgt die Herstellung der erfindungsgemäßen Produkte somit in Abwesenheit von aromatischen Diaminen.

Die Herstellung der zelligen Polyisocyanat-Polyadditionsprodukte kann bevorzugt in Gegenwart von Wasser (c) durchgeführt werden. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (e) und (b) aufgeführt. Per Definition enthalten die Komponenten (b) und (e) somit kein Wasser, das per Definition ausschließlich als (e) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wäßrigen Lösungen der sulfonierten Fettsäuren eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (d) zugefügt werden. Die Katalysatoren (d) können einzeln wie auch in Abmischung miteinander zugegeben werden. Vorzugsweise sind dies metallorganische Verbindungen, wie Zinn-(II)-Salze von organischen Carbonsäuren, z.B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-) Butylpiperazin, N,N,N',N",N"-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (d) in Mengen von 0,001 bis 0,5 Gew.-%, bezogen auf das Prepolymere, zur Anwendung.

Gegebenenfalls können in der Polyurethanherstellung übliche Treibmittel (e) verwendet werden. Geeignet sind beispielsweise niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (c) als Treibmittel eingesetzt.

Bei der erfindungsgemäßen Herstellung des Formteile können Hilfs- und Zusatzstoffe (f) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den erfindungsgemäßen Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnußöl und Zellregler, wie Paraffine und Fettalkohole. Außerdem können als (f) Polysiloxane und/oder Fettsäuresulfonate eingesetzt werden. Als Polysiloxane können allgemein bekannte Verbindungen verwendet werden, beispielsweise Polymethylsiloxane, Polydimethylsiloxane und/oder Polyoxyalkylen-Silikon-Copolymere. Bevorzugt weisen die Polysiloxane eine Viskosität bei 25°C von 20 bis 2000 MPas auf.

Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt.

Die oberflächenaktiven Substanzen werden üblicherweise in Mengen von 0,01 bis 5 Gew.-Teilen, bezogen auf 100 Gew.-Teile der Komponenten (b) angewandt.

## Patentansprüche

1. Federelement, das einen Einleger (1) aus einem kompakten Material mit einer Steifigkeit, die höher ist als die des Materials, aus dem das Federelement besteht, enthält, und ein Teil (2), das als Zusatzfeder wirkt und ein Teil (3), das als Federunterlage wirkt, enthält, **dadurch gekennzeichnet, dass** das Teil (2), das als Zusatzfeder wirkt, einen mittigen zylindrischen Hohlraum (4) aufweist.

2. Federelement nach Anspruch 1, **dadurch gekennzeichnet, daß** es aus einem mikrozellulärem Polyurethan- oder Polyurethan/Polyharnstoffelastomeren besteht.

3. Federelement nach Anspruch 1 oder 2, **dadurch gekennzeichnet, daß** der Einleger (1) aus einem Material besteht, das eine höhere Steifigkeit aufweist als das Material, aus dem das Federelement besteht.

4. Federelement nach einem der Ansprüche 1 bis 3, **dadurch gekennzeichnet, daß** der Einleger (1) aus Metall besteht.

5. Federelement nach einem der Ansprüche 1 bis 4, **dadurch gekennzeichnet, daß** der Einleger (1) aus Hartplastik besteht.

6. Federelement nach einem der Ansprüche 1 bis 4, **dadurch gekennzeichnet, daß** sich der Einleger (1) zwischen dem Teil (2), das als Zusatzfeder wirkt und dem Teil (3), das als Federunterlage wirkt, befindet.

## Claims

1. A spring element which comprises an insert (1) of a compact material having a rigidity which is higher than that of the material of which the spring element consists, and comprises a part (2) which acts as an additional spring and a part (3) which acts as a spring pad, wherein the part (2) which acts as an additional spring has a central cylindrical cavity (4).

2. A spring element as claimed in claim 1, which comprises a microcellular polyurethane elastomer or polyurethane/polyurea elastomer.

3. A spring element as claimed in claim 1 or 2, wherein the insert (1) consists of a material which has a higher rigidity than the material of which the spring element consists.

4. A spring element as claimed in any of claims 1 to 3, wherein the insert (1) consists of metal.

5. A spring element as claimed in any of claims 1 to 4, wherein the insert (1) consists of rigid plastic.

6. A spring element as claimed in any of claims 1 to 4, wherein the insert (1) is present between the part (2) which acts as an additional spring and the part (3) which acts as a spring pad.

## Revendications

1. Elément élastique comprenant une bague d'insertion (1) en un matériau compact, d'une rigidité supérieure à celle du matériau dont est constitué l'élément élastique, et une partie (2) agissant comme ressort additionnel et une partie (3) agissant comme base de ressort, **caractérisé en ce que** la partie (2), qui agit comme ressort additionnel, présente un espace creux cylindrique central (4).

2. Elément élastique selon la revendication 1, **caractérisé en ce qu'**il consiste en un élastomère microcellulaire de polyuréthanne ou de polyuréthanne/polyurée.

3. Elément élastique selon la revendication 1 ou 2, **caractérisé en ce que** la bague d'insertion (1) est constituée d'un matériau présentant une rigidité supérieure à celle du matériau dont est constitué l'élément élastique.

4. Elément élastique selon l'une quelconque des revendications 1 à 3, **caractérisé en ce que** la bague d'insertion (1) est constituée de métal.

5. Elément élastique selon l'une quelconque des revendications 1 à 4, **caractérisé en ce que** la bague d'insertion (1) est constituée de plastique dur.

6. Elément élastique selon l'une quelconque des revendications 1 à 4, **caractérisé en ce que** la bague d'insertion (1) se trouve entre la partie (2), qui agit comme ressort additionnel, et la partie (3), qui agit comme base de ressort.
